(19) Europäisches Patentamt
European Patent Office
Office européen des brevets

(11) **EP 3 495 945 A1**

(12) **EUROPEAN PATENT APPLICATION**

(43) Date of publication:
**12.06.2019 Bulletin 2019/24**

(51) Int Cl.:
***G06F 7/58*** (2006.01)

(21) Application number: **18175107.4**

(22) Date of filing: **30.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.12.2017 JP 2017252380**
**22.01.2018 JP 2018020480**

(71) Applicant: **SNP Hiroshi Nakazawa**
**Hirakata-shi, Osaka 573-0081 (JP)**

(72) Inventors:
• **Nakazawa, Hiroshi**
  **Osaka, Osaka 573-0081 (JP)**
• **Nakazawa, Naoya**
  **Osaka, Osaka 573-0081 (JP)**

(74) Representative: **Wächter, Jochen et al**
**Kroher-Strobel**
**Rechts- und Patentanwälte PartmbB**
**Bavariaring 20**
**80336 München (DE)**

(54) **MAJORANT SIMPLEX TESTS OF MULTIPLICATIVE CONGRUENTIAL RANDOM NUMBER GENERATORS**

(57) The method of majorant simplex test selects excellent MC generators with the highest reliability.

EP 3 495 945 A1

**Description**

**Field of the Invention**

The present invention presents a new and sharp system of methods to select excellent multiplicative congruential (MC) generators of random numbers with uniform and independent statistics. An MC generator consists of an odd integer d > 0 called modulus, an integer z called multiplier coprime with d, and an integer s called seed also coprime with d. They will hereafter be denoted as a set (d, z, s), or as (d, z) if the seed is irrelevant to the context. An MC generator (d, z, s) emits a sequence $\{r_0, r_1, r_2, ...\}$ of integers by recursive congruence relations

$$r_0 := s \ (\mathrm{mod} \ d), \qquad 0 < r_0 < d,$$

$$r_k := s z^k \equiv z r_{k-1} \ (\mathrm{mod} \ d), \quad k = 1, 2, \cdots, \qquad 0 < r_k < d.$$

The uniform random numbers $\{v_0, v_1, v_2, \cdots\}$ to be generated are given by

$$v_k := r_k/d, \qquad k = 0, 1, 2, \cdots, \qquad 0 < v_k < 1.$$

**The basis of the invention**

The limitation to MC random number generators is not at all restrictive. Any random number generators on computers can have only a finite length, and it should be reproducible and portable. Emitted random number sequences should be able to *reproduce* identical results by the demand of users. Generators should work identically when transplanted on different computers with any computing languages. These requirements necessitate generators to work in the integer arithmetic without round-off and truncation errors, to give a sequence of integers which are bounded by a large integer z > 0 and destined to be finite with a period T,

$$\{x_k \ | \ k = 1, 2, \cdots, T, \qquad 0 \le x_k = x_{k+T} < z\},$$

and to emit random rational numbers $\{u_k := x_k / z \ | \ 0 \le u_k < 1, k = 1, 2, \cdots, T\}$. Surprisingly, this *finite* sequence $\{u_k\}$ admits a representation by an MC (d, z) integer sequence $\{r_0, r_1, \cdots, r_{T-1}\}$ transformed to MC uniform random numbers $\{v_j := r_j/d | j = 0, 1, 2, \cdots, T - 1\}$ as follows:

$$0 < v_j - u_{j+1} < 1/z \ll 1, \qquad j = 0, 1, 2, \cdots, T - 1.$$

The proof of this recognition is straightforward, but out of the main line of the invention; please be referred to Nakazawa and Nakazawa (2008). Thus, the titled *majorant simplex tests of MC random number sequences* are presenting a general and non-restrictive tool to select random number sequences with excellent statistics of uniformity and independence.

Reference 1:

Nakazawa and Nakazawa (2008)/ Hiroshi and Naoya Nakazawa: Designs of uniform and independent random numbers with long period and high precision, uploaded in the URL http://www10.plala.or.jp/h-nkzw/pastreports.html on March 9-July 8, 2008 with the filename *3978erv.pdf.* Please see Theorem 2 at p. 8 of this report.

The fundamental problem in random number generation is to find a reliable technology to select MC generators ensuring excellent statistics to its outputs. To this end we have now three powerful tests, which may be specified by a set of integers (U, V, W) with U = 1, 2, ⋯, V = 3, 4, ⋯, and W = 3, 4, ⋯, 6. This set (U, V, W) will characterize *triple tests* consisting of prior arts,

(I) generalized 2nd degree spectral test of (d, $z^u$) for $1 \le u \le U$,
(II) edge tests of (d, z) with degrees $3 \le v \le V$, and
(III) spectral tests of (d, z) for degrees $3 \le w \le W \le 6$.

Generalized 2nd degree spectral tests of $(d, z^u)$ are identical with 2nd degree edge tests, and they examine statistical correlations of pairs of random numbers

$$\{(v_j, v_{j+u}) | j = 0, 1, 2, \cdots; \quad u = 1, 2, \cdots\}.$$

This role of generalized 2nd degree spectral tests are understood by the original structure of the MC integer outputs:

$$r_{j+u} \equiv z^u r_j \equiv sz^{j+u} \pmod{d}.$$

The structure of the 2nd degree edge test is described below as the case v = 2. The edge test of degree v examines consecutive v-tuples of outputs. The method has its basis in the fact that consecutive v-tuples of integer outputs from (d, z, s) may be regarded to give position vectors or points

$$\{(r_j, r_{j+1}, r_{j+2}, \cdots, r_{j+v-1}) \equiv sz^j(1, z, z^2, \cdots, z^{v-1}) \pmod{d} | j = 0, 1, 2, \cdots\}.$$

The translation of this point to modulo d equivalent positions in 2nd, 3rd , $\cdots$, v-th coordinates are realized by addition of integral multiplies of vectors,

$$e_2 := (0, d, 0, \cdots, 0),$$
$$e_3 := (0, 0, d, \cdots, 0),$$
$$\cdots\cdots\cdots\cdots\cdots\cdots\cdots\cdots$$
$$e_v := (0, 0, 0, \cdots, d).$$

The d-translations along the 1st axis are realized by the addition of integral multiplies of the vector

$$e_1' := (d, 0, 0, \cdots, 0) = d(1, z, z^2, \cdots, z^{v-1}) - ze_2 - z^2 e_3 - \cdots - z^{v-1} e_v$$

$$= de_1 - ze_2 - z^2 e_3 - \cdots - z^{v-1} e_v.$$

Therefore, consecutive v-tuples of integer outputs from the MC generator (d, z, s) are all represented by position vectors formed by *integral* multiplies of *basis* vectors

$$e_1 := (1, z, z^2, \cdots, z^{v-2}, z^{v-1}),$$
$$e_2 := (0, d, 0, \cdots, 0, 0),$$
$$e_3 := (0, 0, d, \cdots, 0, 0),$$
$$\cdots\cdots\cdots\cdots\cdots\cdots\cdots\cdots$$
$$e_{v-1} := (0, 0, 0, \cdots, d, 0),$$
$$e_v := (0, 0, 0, \cdots, 0, d).$$

The circumstance may be summarized as follows.
Lemma 1. Consecutive v-tuples of outputs of a MC generator (d, z, s) are seated in a lattice $G_v(d, z)$ in the v-dimensional Euclidean space spanned by basis vectors $\{e_1, e_2, \cdots, e_v\}$,

$$G_v(d, z) := \{i_1 e_1 + i_2 e_2 + \cdots + i_v e_v | i_1, i_2, \cdots, i_v \text{ take all integer values}\}.$$

Here basis vectors, hence the lattice, are determined by d and z. (End of Lemma 1) We say *seated in* the lattice because lattice points are not occupied by v-tuples if their coordinates are multiples of d.

**Regular v-simplex, v = 1, 2, 3, ···**

The overview given by Lemma 1 enables us descriptions of statistics of uniformity and independence of generated random numbers in terms of the geometry of $G_v(d, z)$ lattice. Our principal aim is to have a random integer sequence which gives the weakest negation to the statistical hypothesis that the sequence has consecutive v-tuples which *appear* to be taken from a sample of uniform and independent random numbers. Nakazawa and Nakazawa (2014B) advocated that the ideal lattice $G_v(d, z)$ should be a regular lattice, which we define to be a lattice formed by parallel translations of a regular v-simplex (or better, a unit cell which is a parallelepiped spanned by the same set of basis vectors) as building blocks. We prepare terminologies and notions. Definition 2. In v-dimensional Euclidean space *a v simplex* is a linear hull of v linearly independent vectors issuing from a point to be called origin of the simplex. *A regular v simplex* is defined as a v simplex with all pairs of its (v+1) vertices, totaling

$$_{v+1}C_2 = (v + 1)v/2$$

in number, are at equal distances. A v = 2 regular simplex is a regular triangle, and a v = 3 regular simplex is a regular tetrahedron. (End of Definition 2)

A regular 1 simplex is a line element of any length R. A regular 2 simplex is a regular triangle as said, which is obtained by drawing 2 circles of radius R at both ends of a (regular) 1 simplex (line element) of length R. There arise 2 intersections of circles, but they give the identical shape, and regular 2 simplexes are unique in form. A regular 3 simplex is obtained by drawing 3 spheres of radius R from 3 vertices of a regular 2 simplex with sides R, and by taking one of 2 intersections. The shape is again unique for regular 3 simplexes, the regular tetrahedron. This recursive method of construction to obtain a unique form proceeds to any dimension v = 1, 2, 3, ···.

**Regular lattices for general dimension v**

For any lattice with dimension v > 1, its sets of basis vectors exist infinitely. Each of them spans a parallelepiped, which we call it a unit cell after physics. A unit cell has lattice points at its vertices, but nowhere on edges or inside. We name a unit cell by its special vertex, the origin. Parallel translations of a unit cell, in which the origin itinerates all lattice points, make the unit cell tile the whole space without duplication or vacancy. Correspondingly, the v-dimensional hypervolume of a unit cell is one and the same irrespective of the choice of basis vectors. Consecutive v-outputs of an MC generator (d, z) give said basis vectors $\{e_1, e_2, ···, e_v\}$, and *the absolute value of their determinant* proves that any unit cell of the MC (d, z) lattice has the same hypervolume $d^{v-1}$; this unique hypervolume is called the *determinant of the lattice.* Correspondingly, any set of MC basis vectors spans a v-simplex of hypervolume $d^{v-1}/v!$; this is seen reductively for v = 1, 2, ··· by integrations with the height from the base hypersurface. We introduce a concise definition:

Definition 3. If a v dimensional lattice has a set of basis vectors spanning a regular v-simplex, the lattice is named a v dimensional regular lattice. (End of Definition 3) For v = 2 dimension a regular lattice is called also a triangular lattice. It is constructed by taking a regular triangle of sides of a length, say R, continue to draw circles of radius R at all vertices and taking points of intersection as new lattice points. Obviously, shortest non-zero lattice vectors have a unanimous length R and connect nearest neighbor lattice points. Any other 2 lattice points have distances R' = R + Δ with Δ > 0. For the dimension v = 3 the regular lattice is what is called a face centered cubic lattice. It is constructed taking a regular 2 simplex of sides R, drawing spheres of radius R at all vertices of the regular 2 simplex, taking points of intersections as new lattice points, and continuing the construction of new lattice points. The shortest non-zero lattice vectors have one and the same length R connecting nearest neighbor lattice points, and any other pairs of lattice points define lattice vectors of length R' = R + Δ with Δ >0. Any regular lattice in dimension v > 3 has similar circumstances; the shortest lattice vectors have one and the same length, say R, and any other pair of lattice points are connected by a lattice vector with a larger length R' = R + Δ, Δ>0. Resume an MC (d, z) lattice in v dimension. It is an integer lattice with all lattice points with integer coordinates. A v-dimensional regular lattice requires lattice points with irrational, trigonometric coordinate ratios, and an MC lattice cannot reproduce the regular form exactly. But, *if an MC (d, z) lattice is a small deformation from the regular form*, continuous variation of lattice vector lengths should respect their ordering in regular lattices. The distribution of lattice points in regular lattices, as seat arrangements for consecutive v tuples of random numbers, is certainly most close to be uniform and isotropic, in the sense that the distribution is not dependent on directions. Though an MC lattice with integer coordinates cannot reproduce exactly a regular lattice requiring coordinates with irrational ratios of trigonometric values, the regular lattice geometry was advocated as the ideal for an MC lattice by Nakazawa and Nakazawa (2014B). We show here that the geometrical closeness of an MC (d, z) lattice to a regular geometry, or better the closeness of some MC lattice simplex to the regular form, may be tested as *simplex tests,* not only from below as the existing triple tests but also stringently *from above* as simplex tests presented here anew.

Reference 2:

Nakazawa and Nakazawa (2014B)/ Naoya Nakazawa and Hiroshi Nakazawa, Method of spectral tests of multiplicative congruential random number generators, uploaded in the URL http://www.nakazawa-patents.jp/index2015.html on June 5-July 30, 2014 with the filename *invention2k.pdf*/ This invention was granted EU Patents No. 2884386 and Russian Patent No. 2589405.

**Detailed properties of regular lattices**

We again take a v-dimensional *regular* lattice $G_v{}^*$. Usually, basis vectors of $G_v{}^*$ need not be given so as to span a regular simplex by themselves. But when $G_v{}^*$ is defined by an arbitrary set of basis vectors, we may find the set $\{e_1{}^*, e_2{}^*, \cdots, e_v{}^*\}$ of basis vectors that span a regular simplex in the following way.
Lemma 4. In order to find a set of basis vectors $\{e_1{}^*, e_2{}^*, \cdots, e_v{}^*\}$ that spans a regular v simplex with edge length R in a regular v-dimensional lattice defined by and arbitrary set of basis vectors, we need to find a set of v linearly independent set of lattice vectors with the shortest length R where the linear independence is seen by the non-vanishing determinant of found v vectors. What is obtained is a set among $2^v$ sets of v vectors $\{\pm e_1{}^*, \pm e_2{}^*, \cdots, \pm e_v{}^*\}$. Since their determinants have one and the same non-zero absolute value, each of them may be taken as a set of basis vectors. But it does not necessarily span a regular simplexes, as the case v = 2 of a triangular lattice indicates. The right combination of signs may be found by taking all $2^v$ combinations (in fact, the total sign is irrelevant, so that only $2^{v-1}$ of them matters) $(+++\cdots++/---\cdots--), (-++\cdots++/+--\cdots--),$
$(+-+\cdots++/-+-\cdots--), \cdots,$
compute $_{v+1}C_2 = (v+1)v/2$ vectors connecting pairs of (v + 1) vertices of spanned v simplexes, and find the sole combination that give edges with a unanimous length R. (Proof) Said properties of a regular lattice obviously prove the assertion.
If a general MC lattice is close geometrically to a regular lattice, the ordering of lengths of lattice vectors will be close to the regular case. Particularly, $_{v+1}C_2$ shortest non-zero lattice vectors will be shorter than all other lattice vectors. (Majorant) simplex tests aim to find this ordering. We start key arguments by summarizing technical contents of prior arts, generalized 2nd degree tests, (smallest) edge tests and spectral tests.

**Generalized 2nd degree edge tests of an MC generator (d, $z^u$) for $1 \leq u \leq U$**

The 2nd degree edge test is identical with the 2nd degree spectral tests. For later conveniences we describe here in terms of edge tests. Generalized 2nd degree edge tests search for the shortest edge length of 2-simplexes (triangles) in the MC lattice $G_2(d, z^u)$ for u = 1, 2, $\cdots$. This generator (d, $z^u$) gives the integer sequence
$\{s, sz^u, sz^{2u}, sz^{3u}, \cdots\},$
and the 2nd degree edge test examines correlations of consecutive 2-tuples arising in this sequence. If we aim uniformity and independence, this sequence should give random numbers that look independent for any u = 1, 2, $\cdots$. The 2-dimensional lattice $G_2(d, z^u)$ has the set of basis vectors

$$e_1 = (1, z^u), \qquad e_2 = (0, d).$$

This and any set of basis vectors span the area d by their determinant, and any 2 simplexes (triangles) formed by 2 basis vectors have the area d/2. The titled test searches for the shortest edge of these 2-simplexes. In reality the art is to find the shortest non-zero lattice vector of length $R^{(u)}(d, z^u)$. The ideal geometry is that of the regular 2-simplex with the area d/2; it has the edge length

$$R^* := (d/2)^{1/2}3^{-1/4}.$$

This is the shortest non-zero length of regular lattice vectors, as seen from the construction noted beneath Definition 2. There is a fact that any triangle of area d/2 has its shortest edge length which is not exceeding R*; please see the elementary proof in Nakazawa and Nakazawa (2015). This fact implies $R^* > R^{(u)}(d, z^u)$, because the integer lattice $G_2(d, z^u)$ cannot reproduce the regular triangle needing irrational coordinates. The generalized 2nd degree edge test defines

the ratio

$$\varepsilon_2(d, z^u) := R^*/R^{(u)}(d, z^u) > 1$$

as the valuation of the MC generator of $(d, z^{(u)})$. The criterion of passability is

$$1 < \varepsilon_2(d, z^u) := R^*/R^{(u)}(d, z^u) < 1.25,$$

initiated by Fishman and Moore (1986) with the case $u = 1$. Explicit procedures to compute the shortest non-zero length $R^{(u)}(d, z^u)$ may be described as follows. A general lattice vector e of the lattice $G_2(d, z^u)$ has the form

$$e = i_1 e_1 + i_2 e_2 = (i_1, i_1 z^u + i_2 d)$$

where $i_1$ and $i_2$ are integers. Its length $\|e\|$ is

$$\|e\|^2 = (i_1)^2 + (i_1 z^u + i_2 d)^2, \qquad \|e\| > |i_1|.$$

The search of the smallest value of $\|e\|^2 > 0$ may be performed by sweeping the integer $i_1 > 0$ only; the integer $i_2$ can give 2 possibile contributions
mod($i_1 z^u$, d) or d - mod($i_1 z^u$, d).

The necessary range of the sweep of $i_1 > 0$ is rather compact. Noted criterion for the passability necessitates the existence of the smallest non-zero length $R^{(u)}$ of the vector in the MC lattice $G_2(d, z^u)$ in the range $R^*/1.25 < R^{(u)} < R^*$. Therefore, the lattice vector e of $G_2(d, z^u)$ needs to be swept in the range $0 < i_1 < R^* + 1$, for example. If some lattice vector e satisfies the criterion, the MC generator $(d, z^u)$ is passable. If not, the generator should be abandoned. The upper bound U of the degree is usually required to be $U \geq 6$; desirably $U \geq 8$, 9 will be better. Independence cannot be concluded from the absence of pair correlations. The (generalized) 2nd degree edge (or spectral) tests give merely that 2 random numbers satisfy a necessary condition for independence. But computing of second degree generalized edge tests proceeds very swiftly, and enable us to evade hopeless generators. Any test of MC generators should be started from this generalized 2nd degree edge tests.

Reference 3.

Nakazawa and Nakazawa (2015)/ Naoya Nakazawa and Hiroshi Nakazawa: The geometry of spectral tests, in the URL http://www.nakazawa-patents.jp/index2015.html uploaded on April 10-June 7, 2015 with the filename sptest15june7naorev.pdf. Please see pp. 4-5 for the proof of the fact that *among triangles with the same area the smallest edge takes the largest value with a regular triangle.*

Reference 4.

Fishman and Moore (1986)/ G. S. Fishman and L. R. Moore: An exhaustive analysis of multiplicative congruential random number generators with modulus 231 - 1, in SIAM Journal on Scientific and Statistical Computing 7 (1986), pp. 24-45.

**Edge tests of MC generator (d, z) for degrees v in $3 \leq v \leq V$**

We now describe structures of edge tests for degrees v , v = 3, 4, ⋯.
Definition 5. Let (d, z) be an MC generator, implying that its consecutive v integer outputs are in the lattice $G_v(d, z)$ spanned by basis vectors

$$e_1 := (1, z, z^2, \cdots, z^{v-2}, z^{v-1}),$$
$$e_2 := (0, d, 0, \cdots, 0, 0),$$
$$e_3 := (0, 0, d, \cdots, 0, 0),$$
$$\cdots\cdots\cdots\cdots\cdots\cdots\cdots\cdots$$
$$e_{v-1} := (0, 0, 0, \cdots, d, 0),$$
$$e_v := (0, 0, 0, \cdots, 0, d).$$

Let finally (any one of) the shortest non-zero lattice vector of $G_v(d, z)$ be denoted as $e_v^{(min)}(d, z)$ with its Euclidean length $R_v(d, z) := \|e_v^{(min)}(d, z)\|$. The edge test valuation $\varepsilon_v(d, z)$ of degree v is defined as follows:

$$\varepsilon_v(d, z) := R_v*/R_v(d, z), \quad R_v* := v^{1/2}(v + 1)^{-(v-1)/(2v)}d^{(v-1)/v}.$$

The numerator $R_v*$ is the edge length of the regular v-simplex with the hypervolume $d^{v-1}/(v!)$. (End of the Definition 5) The degree v edge test with the criterion for the passability

$$1 < \varepsilon_v(d, z) < 1.25$$

was advocated in Nakazawa and Nakazawa (2017). The denominator $R_v(d, z)$ of $\varepsilon_v(d, z)$ is the shortest length of lattice vector of the v dimensional MC $(d, z)$ lattice, and the criterion $\varepsilon_v(d, z) > 1$ selects generators with $R_v(d, z) > R_v*$. Compared to the prior art of *spectral tests with regular simplex criterion*, the power of discrimination seems moderately sharper. The largest merit of the edge test is that its programming is straightforward and easy, admitting us higher degrees $7 \leq v \leq 10$ for practical aims, while programming of spectral tests meets difficulties for $v \geq 7$. Even edge tests meet gradually increasing difficulties in computing time as the degree v increases. The matter should be left and hoped to the development of faster computers and of devices in parallel computing. Prospects seem to be on the side of edge tests. The valuation of edge tests for the degree $v \geq 3$ usually has cases $\varepsilon_v(d, z) < 1$ as well as $\varepsilon_v(d, z) > 1$, differently from the case $v = 2$ destined to give only $\varepsilon_2(d, z) > 1$. The underlying recognition here is that only cases with $\varepsilon_2(d, z) > 1$ witness the geometrical closeness of the lattice $G_v(d, z)$ to the regular form. This recognition will later be confirmed by adding results of simplex tests, or *largest edge tests* (LET's). The edge test stated so far stands on the smallest length of the lattice vector which originally was an edge of a regular simplex in a regular lattice. We therefore use the word *smallest edge test* (SET) hereafter for clearer distinctions. We also propose to call the totality of SET's and LET's as *simplex tests.*

Reference 5.

Nakazawa and Nakazawa (2017)/ Naoya Nakazawa and Hiroshi Nakazawa: Edge tests of multiplicative congruential random number generators, uploaded in the URL http://www.nakazawa-patents.jp with the filename 17july27_sept9.pdf on September 9, 2017.

**Spectral tests of MC generator (d, z) with degrees w ($3 \leq w \leq W \leq 6$)**

The (smallest) edge test was given as an art that takes MC lattices which may be regarded as a small deformation of the regular lattice, and compare MC simplexes and regular simplexes by their (shortest) edges. Preceding spectral tests have a long history since Fishman and Moore (1986), but in between it underwent amendments in their criteria to regular simplex forms for degrees $v \geq 3$. Please be referred to Nakazawa and Nakazawa (2014B). Present spectral tests consider a w-dimensional MC lattice $G_w(d, z)$ with $3 \leq w \leq W \leq 6$ and its simplexes that may be regarded as small deformations of the regular w-simplex, compute heights of vertices to their facing base hyperplanes in the simplex, find the largest $H_w(d, z)$ of these heights, and give the spectral test valuation $\sigma_w(d, z)$ defined with the height $H_w*$ of vertices in the corresponding regular w-simplex:

$$\sigma_w(d, z) := H_w(d, z)/H_w*.$$

Neat geometrical properties of dual lattice vectors give charming methods for computing this $\sigma_w(d, z)$; please see Nakazawa and Nakazawa (2015) for an unabridged review. As the treated object *heights of vertices to their facing base hyperplanes* suggests, the method is somewhat circuitous, and the power of spectral tests, as the discriminant of an excellent MC generator (d, z), cannot be said sharper than edge tests. The weakest point is that the extension of the degree w of the test beyond w = 6 makes the programming very difficult, and there does not seem to exist results for w $\geq$ 7 as yet. Please see examples shown in later parts.

**Simplex tests of (d, z) MC generators with degrees v (3 $\leq$ v $\leq$ V)**

The method of simplex tests of degrees v $\geq$ 3 stand on simple and clear geometrical structures, and give the sharpest discrimination for excellent MC (d, z) generators. It takes the v-dimensional MC lattice $G_v(d, z)$ formed by v consecutive integer outputs, computes not only the shortest non-zero lattice vector but v-shortest lattice vectors, and re-constructs the v-simplex in $G_v(d, z)$ akin to the regular v-simplex. The method relies on properties of the v-dimensional regular lattice and of the MC lattice $G_v(d, z)$ deformed slightly therefrom. Rewriting from Lemma 4, we may note that

(1) a v-dimensional regular lattice $G_v^*$ has v basis vectors spanning a regular v-simplex and giving (v+1) vertices with their $_{v+1}C_2$ = (v+1)v/2 pairs at an equal distance R > 0;
(2) the same number of length R shortest lattice vectors exist connecting these pairs if we discard differences of origin and of signs;
(3) any other non-zero lattice vectors have lengths R' $\geq$ R + $\Delta$ with a $\Delta$ > 0;
(4) any linearly independent set of v vectors {$e_1^*$, $e_2^*$; $\cdots$, $e_v^*$} out of these length R shortest vectors may be used as basis vectors of $G_v^*$ spanning the identical determinantal hypervolume $d^{v-1}/v!$;
(5) but the degeneracy exists that $\pm e_k^*$ have the same length, and the set of $2^v$ signs

$$\{\varepsilon_1 = \pm 1, \varepsilon_2 = \pm 1, \cdots, \varepsilon_v = \pm 1\}$$

give the set of $2^v$ basis vectors

$$\{\varepsilon_1 e_1^*, \varepsilon_2 e_2^*, \cdots, \varepsilon_v e_v^*\}$$

giving one and the same lattice determinant;
(6) and only 2 sets among these basis vectors span regular v-simpex.

If an MC lattice $G_v(d, z)$ is geometrically an infinitesimal deformation of this regular lattice $G_v^*$ with the same lattice determinant, then

(A) the degeneracy of the same length of shortest lattice vectors in the regular lattice requires irrational coordinates to represent their ratios of trigonometric values showing geometrical symmetries:
(B) integer coordinates of the MC lattice $G_v(d, z)$ do not allow for such irrational ratios of lattice coordinates and resolves degeneracies of lattice vector lengths except for the trivial one of signs; and
(C) if $G_v^*$ vectors {$e_1^*$, $e_2^*$, $\cdots$, $e_v^*$} span the regular v-simplex and its edge lengths are modified into those of a v-simplex of the MC $G_v(d, z)$ lattice, all lengths of vectors giving latter edges will not be able to go across the finite gap, and will remain to be shorter than any other lattice vectors of $G_v(d, z)$.

Happy to say, this situation enables us to see the figure of infinitesimally modified regular simplex in the regular lattice in the cooperation of the prior art of *smallest edge tests.* For clear distinctions, we call tests to be introduced as *largest edge tests* (LET's) or majorant simplex tests. Under the proviso that circumstances are to be restricted to *infinitesimal modifications from regular lattice geometry,* all procedures are just as described in Claim 1. We present below explicit procedures of majorant simplex tests (or LET's) and SET's, to be altogether called as *simplex tests,* by the case of v = 4.

**Detailed description of procedures of simplex tests**

We describe here procedures of simplex tests by the case of the dimension v = 4 with examples. Relevant MC lattice $G_4(d, z)$ has its lattice vector e is

$$e = i_1 e_1 + i_2 e_2 + i_3 e_3 + i_4 e_4$$
$$= (i_1, \, i_1 z + i_2 d, \, i_1 z^2 + i_3 d, \, i_1 z^3 + i_4 d)$$

for integers $i_1$, $i_2$, $i_3$ and $i_4$. The procedure to compute shortest 4 lattice vectors are noted in steps as follows.

(1) Since d is large, 2nd to 4th components of relevance are exhausted by the following 8 cases. Namely, all computations are lead in the integral form of $\|e\|^2$, in which only $2^{v-1} = 2^3 = 8$ cases,

the 2nd component $i_1 z + i_2 d$ is either $\mathrm{mod}(i_1 z, d)$ or $d - \mathrm{mod}(i_1 z, d)$,
the 3rd component $i_1 z^2 + i_3 d$ is either $\mathrm{mod}(i_1 z^2, d)$ or $d - \mathrm{mod}(i_1 z^2, d)$,
the 4th component $i_1 z^3 + i_4 d$ is either $\mathrm{mod}(i_1 z^3, d)$ or $d - \mathrm{mod}(i_1 z^3, d)$,

are to be examined, with the integer $i_1 > 0$ sweeping, and archiving the shortest 4 vectors. In the sweep of $i_1$ a newly found shorter vector is added to the archived shortest group, and the new set of 4 shortest vectors is confirmed of its linear independence by their determinant, which is to give the absolute value $d^{v-1} = d^3 > 0$. If this is true, the new set of $v = 4$ shortest vectors replaces the old set. The determinant is computed with real coordinates, and experientially the pivoting was unnecessary.

(2) At the end of searching process we take a set $\{e_1', e_2', \cdots, e_v' = e_4'\}$ of shortest, linearly independent lattice vectors satisfying

$$0 < \left\| e_1' \right\| \leq \left\| e_2' \right\| \leq \cdots \leq \left\| e_v' \right\|.$$

Then we take $2^v/2 = 2^{v-1} = 8$ sets of signs $\{\varepsilon_1, \varepsilon_2, \cdots, \varepsilon_4\}$,

{++++/----},
{-+++/+---}, {+-++/-+--}, {++-+/--+-},
{+++-/---+},
{--++/++--}, {-+-+/+-+-}, {+--+/-++-},

which had better be realized by multiple do loops to avoid omission, and consider sets of lattice vectors $\{\varepsilon_1 e_1', \varepsilon_2 e_2', \cdots, \varepsilon_4 e_4'\}$; all of these lattice vectors have one and the same absolute value $d^{v-1} = d^3$ for their determinants, and they may be used as basis vectors. From each set of basis vectors we construct a 4-simplex, compute lengths of all edges (which exist $_{v+1}C_2 = (v + 1)v/2$ in total number) from data of basis vectors. The shortest edge is certain to be spanned by $e_v^{(\min)} := e_1'$; we denote its length as

$$R_v^{(\min)} := \left\| e_v^{(\min)} \right\| = \left\| e_1' \right\|.$$

For each set $\{\varepsilon_1, \varepsilon_2, \cdots, \varepsilon_4\}$ of signs we take 4-simplex spanned by basis vectors $\{\varepsilon_1 e_1', \varepsilon_2 e_2', \cdots, \varepsilon_4 e_4'\}$, we compute $_{v+1}C_2 = (v + 1)v/2$ edge lengths, and denote

$$R_v^{(\max)}(\varepsilon_1, \varepsilon_2, \cdots, \varepsilon_4)$$

for their largest value. Then we find the smallest of this value to be denoted

$$R_v^{(\max)}$$

as we change the set $\{\varepsilon_1, \varepsilon_2, \cdots, \varepsilon_4\}$ of signs. Vector data will show that this *smallest of largest values* corresponds to an edge given by a vector $e_v^{(\min)}$:

$$R_v^{(\max)} = \left\| e_v^{(\max)} \right\|.$$

We thus find a specific set $\{\varepsilon_1, \varepsilon_2, \cdots, \varepsilon_4\}$ of signs which give basis vectors $\{\varepsilon_1 e_1', \varepsilon_2 e_2', \cdots, \varepsilon_4 e_4'\}$ as the small deformation from the basis vectors that span a regular simplex in the regular lattice.

(3) The regular v-simplex with the hypervolume $d^{v-1} = d^3$ is known to have the edge length $R_v^*$ is known to be

$$R_v^* = v^{1/2}(v + 1)^{-(v-1)/(2v)}d^{(v-1)/v}.$$

The v-th degree simplex test valuations of an MC (d, z) generator are given by the set of 2 values

$$val_v^{(min)}(d, z) := R_v^*/R_v^{(max)}, \quad val_v^{(max)}(d, z) := R_v^*/R_v^{(min)},$$
$$val_v^{(min)}(d, z) < val_v^{(max)}(d, z).$$

The upper valuation $val_v^{(max)}(d, z)$ is the same as the v-th degree edge test valuation, which demands

$$val_v^{(max)}(d, z) < 1.25$$

as usual for the passability of (d, z). The clue of the v-th degree simplex test is in the introduction of the lower bound of passability

$$0.67 < val_v^{(min)}(d, z).$$

This demands that the deformation of the regular v-simplex into an MC (d, z) simplex should not enhance the largest edge length too much. The value 0.67 was found adequate from typical applications. Please see its usefulness from examples. The totality of these,

$$0.67 < val_v^{(min)}(d, z) < val_v^{(max)}(d, z) < 1.25$$

is the most stringent criterion for passability of the v-th degree simplex test obtained by the combination of the v-th degree largest edge test (LET) and the smallest edge test (SET) of the MC generator (d, z).

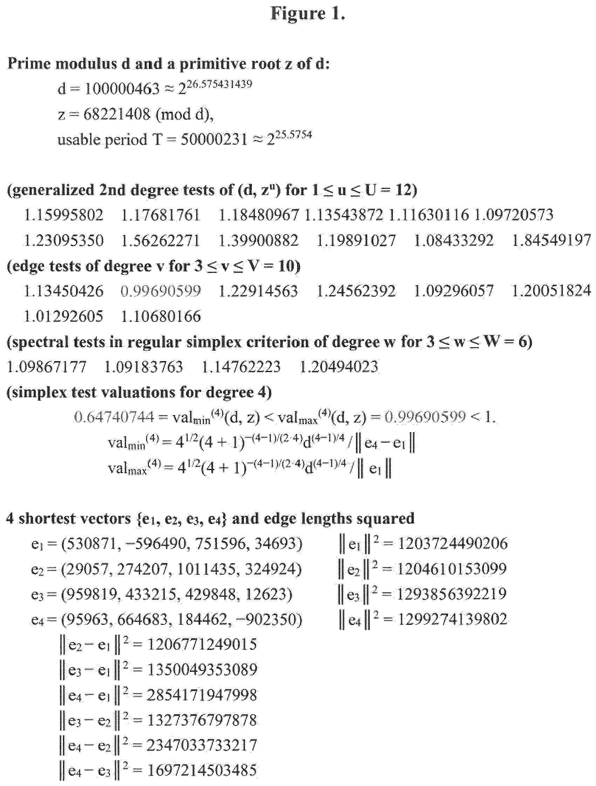

**An Application: Explanations of Figure 1**

Stated procedures are shown by examples. First we refer on a problem that motivated us to think on the present majorant simplex test. Figure 1 shows the performance of the MC generator with the prime modulus d and its primitive root multiplier z,

$$d = 100000463 \approx 2^{26.575431439}, \quad z = 68221408 \,(mod\ d),$$

with the usable period $T = 50000231 \approx 2^{25.5754}$. Its performance data are reproduced below in the (U, V, W) type triple tests, with the new simplex test for degree 4:

(generalized 2nd degree tests of (d, $z^u$) for $1 \le u \le U = 12$)
1.15995802 1.17681761 1.18480967 1.13543872 1.11630116 1.09720573 1.23095350 1.56262271 1.39900882 1.19891027 1.08433292 1.84549197
(edge tests of degree v for $3 \le v \le V = 10$)
1.13450426 0.99690599 1.22914563 1.24562392 1.09296057 1.20051824 1.01292605 1.10680166
(spectral tests in regular simplex criterion of degree w for $3 \le w \le W = 6$)
1.09867177 1.09183763 1.14762223 1.20494023
(simplex test valuations for degree 4)

$$0.64740744 = \text{val}_4^{(\min)}(d, z) < \text{val}_4^{(\max)}(d, z) = 0.99690599 < 1.$$

The generator passes (U, V, W) = (7, 10, 6) triple tests, and appear all excellent except that the shortest edge length, hence all edge lengths, of the simplex of basis vectors are larger than the regular case. Natural questions are: Is this a good generator or not? What is happening with the degree 4 edge test? Thus we wanted to *see* the simplex spanned by the optimal basis vectors of $G_4(d, z)$ lattice. We needed to find 4 shortest lattice vectors $\{e_1', e_2', e_3', e_4'\}$ by computing, consider their all possible forms $\{\omega_1 e_1', \omega_2 e_2', \omega_3 e_3', \omega_4 e_4'\}$ as basis vectors by assigning signs $\omega_k = \pm 1$ ($1 \leq k \leq 4$), by constructing a 4-simplex on each of such basis vector sets, by finding the largest of squared lengths of all $_5C_2 = 10$ edges (or better, vectors giving such edges) connecting 5 vertices of each simplex, and by selecting the most hypersphere-like simplex giving the shortest of noted largest (squared) edge length. Figure 1 gives the list of 10 squared lengths of vectors $\{e_1, e_2, e_3, e_4, e_2 - e_1, e_3 - e_1, e_4 - e_1, e_3 - e_2, e_4 - e_2, e_4 - e_3\}$ in this selected set. They are reproduced below.

$$e_1 = (530871, -596490, 751596, 34693) \qquad \|e_1\|^2 = 1203724490206$$

$$e_2 = (29057, 274207, 1011435, 324924) \qquad \|e_2\|^2 = 1204610153099$$

$$e_3 = (959819, 433215, 429848, 12623) \qquad \|e_3\|^2 = 1293856392219$$

$$e_4 = (95963, 664683, 184462, -902350) \qquad \|e_4\|^2 = 1299274139802$$

$$\|e_2 - e_1\|^2 = 1206771249015$$

$$\|e_3 - e_1\|^2 = 1350049353089$$

$$\|e_4 - e_1\|^2 = 2854171947998$$

$$\|e_3 - e_2\|^2 = 1327376797878$$

$$\|e_4 - e_2\|^2 = 2347033733217$$

$$\|e_4 - e_3\|^2 = 1697214503485$$

This set of basis vectors realizes the shape of the simplex that is most akin to the regular case, giving the simplex test valuations

$$4^{1/2}(4 + 1)^{-(4-1)/(2\cdot 4)}d^{(4-1)/4} / \|e_4 - e_1\| =: \text{val}_4^{(\min)}(d, z),$$

$$4^{1/2}(4 + 1)^{-(4-1)/(2\cdot 4)}d^{(4-1)/4} / \|e_1\| =: \text{val}_4^{(\max)}(d, z),$$

which result in

$$0.64740744 = \text{val}_4^{(\min)}(d, z) < \text{val}_4^{(\max)}(d, z) = 0.99690599 < 1.$$

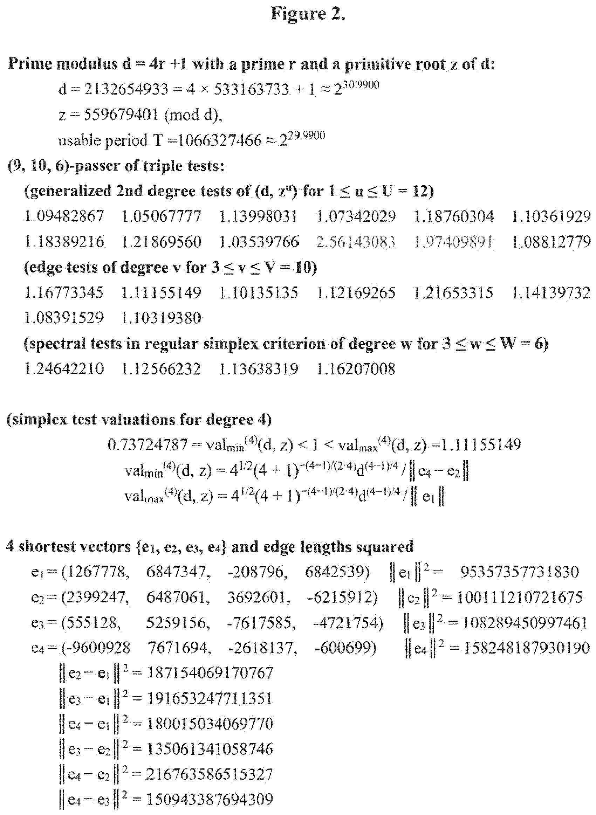

Inventors do not recommend this generator for use. All edge lengths are larger than the regular simplex cases, i.e. all simplex-test-valuations are below 1. Though the *distribution* of edge lengths is notably compact excepting 2 edges, their *magnitudes* are too large, and the suggested form of the simplex are imagined alien from the regular simplex case. Please see other natural and excellent cases in Figures 2-7 of simplexes in hypervolume conserving deformations, accounted for below and shown in Figures 2-7. Of course, experiences of Inventors are limited, and they might possibly be erroneous in this judgment, except for the objective fact that this generator is a very rare case that passes all of triple tests with flags flying in regard to values of respective tested edge lengths, with some valuation below 1 and have the too small lower end of simplex test valuations. We would say that this (d, z) gives an MC lattice that is not a small deformation of the regular case.

**Explanation of Figures 2**

Figure 2 is a prime-primitive root generator with the excellent (U, V, W) = (9, 10, 6) type triple test performance with the period $T \approx 2^{30}$. The prime modulus has the structure d = 4r + 1 with another prime r. A prime of this type invariably enjoys a simplification that the multiplier 2 is its (smallest) primitive root. This remarkable and useful fact was shown by Naoya Nakazawa with a neat proof. Please see Nakazawa and Nakazawa (2014A). We are further happy here to report excellent degree 4 simplex test and edge test valuations

$$0.73916544 = \mathrm{val}_4^{(\mathrm{min})}(d, z) < 1 < \mathrm{val}_4^{(\mathrm{max})}(d, z) = 1.11155149,$$

together with excellent results of triple tests in Figure 2. Although we do not know valuations in degrees other than 4, above noted performances will be highly desirable technologically, if only the small period $T \approx 2^{30}$ suffices for simulations.

Reference 6.

Nakazawa and Nakazawa (2014A)/ Naoya Nakazawa and Hiroshi Nakazawa: Constructive design of uniform and independent random number generators, uplpaded on April 29-August 5, 2014 in the URL http://nakazawa-patents.jp/index2015.html with the filename invention1a.pdf.

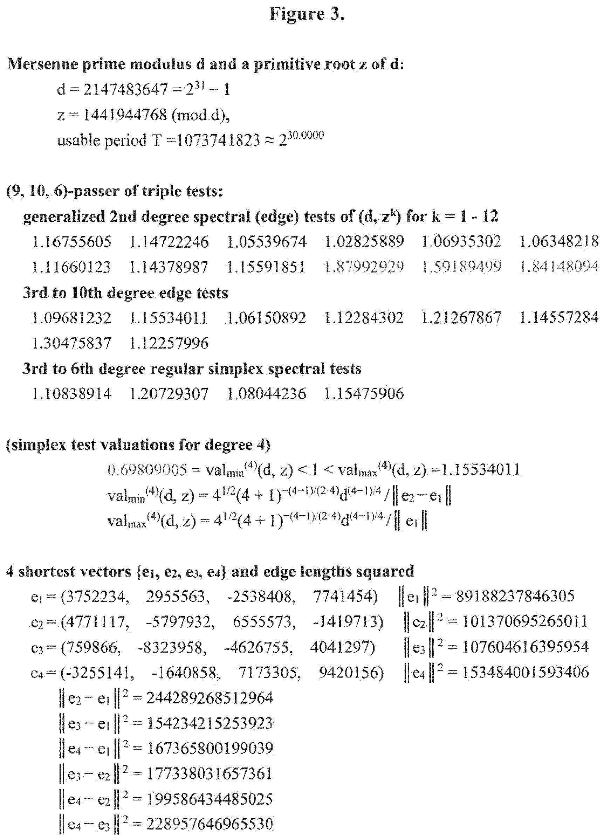

**Explanation of Figure 3**

Figure 3 shows the best member in the Mersenne prime modulus = $2^{31}$ - 1 with its primitive root multiplier. Triple test performance is (9, 10, 6) type, and the valuations in the simplex test and the edge test of degree 4 are

$$0.69809005 = \mathrm{val}_4^{(\mathrm{min})}(d, z) < 1 < \mathrm{val}_4^{(\mathrm{max})}(d, z) = 1.15534011.$$

This MC generator will well serve for use if the independent appearance of consecutive 10 random numbers suffices with the approximate period length $2^{29}$.

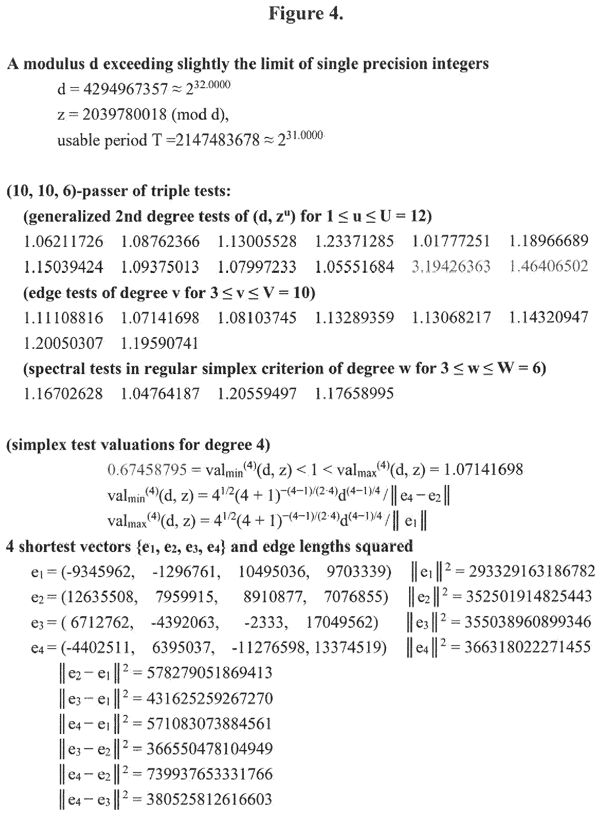

**Explanation of Figure 4**

Figure 4 is concerned with a prime modulus modulus d exceeding the single precision limit for integers slightly:

$$d = 4294967357 > 2^{32} = 4294967296, \qquad z = 2039780018.$$

The multiplier is a primitive root. The triple test performance (U, V, W) = (10, 10, 6) is ideal, if we are satisfied with the independence of 10 consecutive random numbers and by the small usable period $T \approx 2^{31}$. The simplex and edge test valuations of degree 4 are

$$0.67458795 = \mathrm{val}_4^{(\mathrm{min})}(d, z) < 1 < \mathrm{val}_4^{(\mathrm{max})}(d, z) = 1.07141698$$

are excellent.

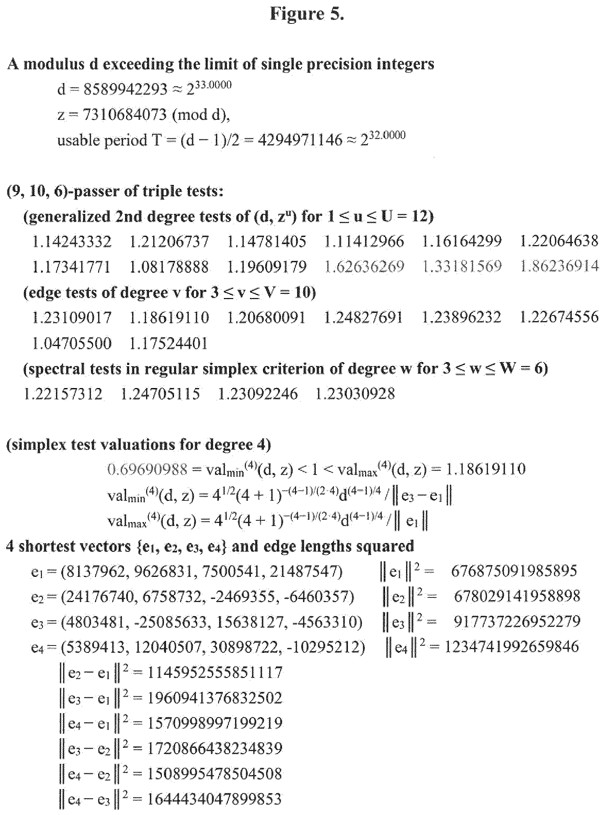

**Explanation of Figure 5**

This generator has a still larger prime modulus d = 8589942293 ≈ $2^{33.0000}$ and its primitive root multiplier z. Triple tests show the excellent performance of (9, 10, 6) type. The simplex and the edge tests for the 4th degree show

$$0.69690988 = \mathrm{val}_4^{(\min)}(d, z) < 1 < \mathrm{val}_4^{(\max)}(d, z) = 1.18619110.$$

These results are almost (0.70, 1.20) and excellent, though we have seen and will see better performers, even in the range (0.73, 1.10). This MC generator will work satisfactorily if the statistical independence of 10 consecutive random numbers suffices in simulations with the period T = (d - 1)/2 ≈ $2^{32.0000}$.

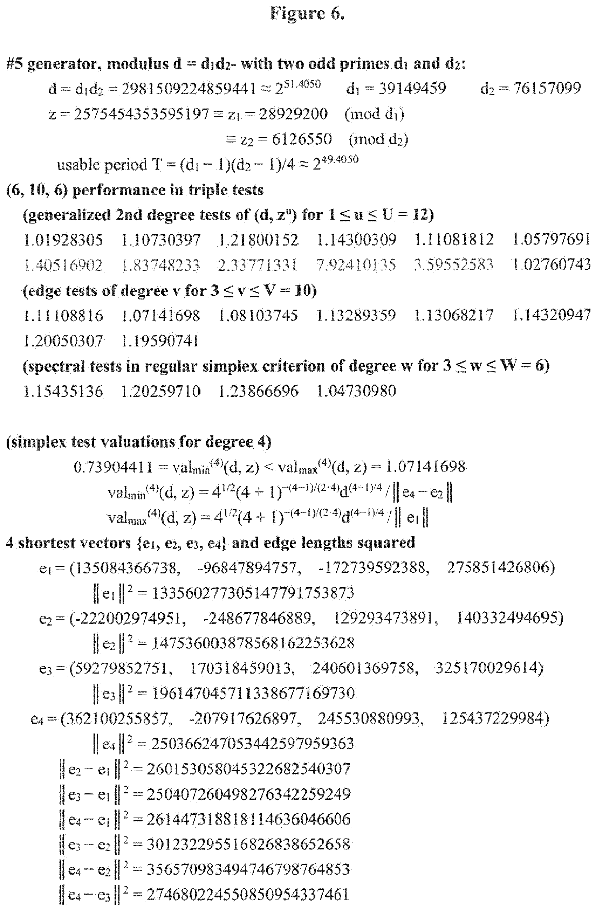

**Explanation of Figure 6**

Figures 6-7 are concerned with the modulus formed as a product of two odd primes, d = $d_1 d_2$. This structure makes spectral and edge tests easier; we shall therein have powerful tools of Sun Tzu's theorem, to have valuable means to compute only in the double precision integers and to reduce the computing time choosing subgenerators ($d_1$, $z_1$) and ($d_2$, $z_2$) excellent. MC generators were named #1 to #9, and reported in Nakazawa and Nakazawa (2014C) with their excellent spectral test valuations in regular simplex criterions. They were later filed to Japan Patent Office as practical new models disclosing their constructions. In the present Figure 6 the MC generator #5 is shown with its construction, valuations in generalized 2nd degree tests, edge tests and spectral tests of regular simplex criterions. Generalized 2nd degree test performances are excellent only for (d, $z^u$) with u ≤ 6. However, edge test performance is excellent and the present degree 4 simplex test gives us a bright prospect that we are able to find generators satisfying

$$0.73904411 = \mathrm{val}_4^{(\min)}(d, z) < \mathrm{val}_4^{(\max)}(d, z) = 1.07141698.$$

Of course, the way for us to proceed will be still far ahead. If only consecutive 6 random numbers are required to appear independent, this generator may well be recommended if simplex tests for degrees other than 4 may be obtained excellently. The usable period T ≈ $2^{49.4}$ will suffice for many simulations at present.

Reference 7.

Nakazawa and Nakazawa (2014C)/ Hiroshi Nakazawa and Naoya Nakazawa: The prospectus of Nakazawa Patents, uploaded on July 12-October 26, 2014 in the URL http://nakazawa-patents.jp/index2015.html with the filename eprospectus141026.pdf.

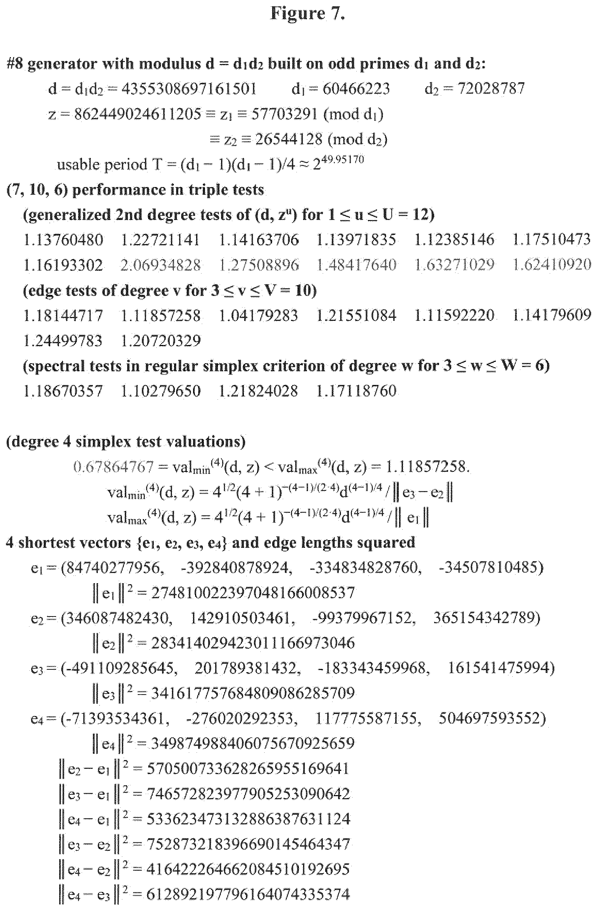

**Explanation of Figure 7**

This is #8 MC generator in Nakazawa and Nakazawa (2014C). It is one of 2 best performers, and is the best if we need nice appearance of consecutive 8 random numbers with a large period T ≈ $2^{49.95170}$. Simplex and edge tests of degree 4 give

$$0.67864767 = \mathrm{val}_4^{(\min)}(d, z) < \mathrm{val}_4^{(\max)}(d, z) = 1.11857258.$$

which is somewhat mediocre in $\mathrm{val}_4^{(\min)}(d, z)$, though. Stepping back to the general overview, we might well say about our present status that we are still in need of more MC generators with excellence and larger periods.

**Conclusions**

The simplex test of degree 4, described in detail here with some explicit results, is doubtlessly the most stringent test that selects MC generators with excellent statistics of consecutive 4 random number outputs. We are strongly impressed that regular simplex criterions, employed for all of spectral tests and edge tests, provide these excellent structures to compute basis vectors of MC lattices which have their geometries near the reference system, the regular lattice with regular simplexes as their building blocks. Although presentations given here referred only to the consecutive v = 4 random number outputs, all basic structures of methods obviously extend to any degrees v = 3, 4, 5, ⋯, putting aside the practical difficulties of programming and of sharp increase of computing time as v increases, as experiences in edge tests suggest. The search of good candidate MC generators should be commenced with (U, V, W) type triple tests; since simplex tests put their structural bases on **Lemma 7** holding only when the MC lattice is deformed *slightly* from the regular form, MC generators need first be selected close to regular lattices. The search beginning from simplex tests will be inefficient. It is yet obvious that final judgments should invoke decisive inferences of simplex test valuations. And any MC generators used in simulations should bear their valuations in the form

$$0.67 < \text{val}_v^{(\text{min})}(d, z) < \text{val}_v^{(\text{max})}(d, z) < 1.25, \quad v = 3, 4, \cdots,$$

to ascertain the accuracy of simulations themselves. As regards the upper bound 1.25 valuations in this form have been firmly experienced to be fertile. A natural hope will be to strengthen the lower bound from 0.67 to 0.70 or 0.75. Yet worries still linger about that 0.70, not to say 0.75, may be too stringent and might extinct passers. Thus we chose here 0.67 for safety as ensured by examples. The hope is that some day the progress in research works will enable us to take narrower criterions such as (0.80, 1.20) or (0.90, 1.10). To pass triple tests with regular simplex criterions (Nakazawa and Nakazawa, 2017) is doubtlessly the adequate qualification for excellent MC generators. And the proposed simplex tests will give highest guarantees for them: After all, they enables us to *see* geometrical forms of MC lattices in any higher dimension v = 4, 5, ⋯ for the first time. The computing will not become much heavier than smallest edge tests (SET's) which treat only $\text{val}_v^{(\text{max})}$. Yet we need additional cares to analyze obtained vector results, viz. the valuation of

$$_{v+1}C_2 = (v + 1)v/2$$

edge lengths over $2^v/2 = 2^{v-1}$ sets of basis vectors. As a realistic tactics we should employ triple tests (generalized 2nd, edge and spectral tests on regular simplex criterions) to first select excellent candidates, and make the final judgment by the simplex criterion

$$0.67 < \text{val}_v^{(\text{min})}(d, z) < 1 < \text{val}_v^{(\text{max})}(d, z) < 1.25$$

for suitable degrees v = 3, 4, ⋯. We thus have far more reliable judgment by the present simplex tests. By the way, an example presented here again gave the conclusion that $\text{val}_v^{(\text{min})}(d, z) < 1 < \text{val}_v^{(\text{max})}(d, z)$ gives an adequate generator (d, z), and $\text{val}_v^{(\text{min})}(d, z) < \text{val}_v^{(\text{max})}(d, z) < 1$ is a sign that the generator is inadequate. This will give a *technological* reinforcement that edge tests and spectral tests should post exclusively the criterion $1 < \text{val}_v^{(\text{max})}(d, z)$ for the passability of (d, z).

## Claims

1. A method of the majorant simplex test or the largest edge test (LET) to examine performances of any multiplicative congruential (MC) generator (d, z), which comprises an odd integer d for the modulus with an integer z coprime to d for the multiplier, generates a sequence of integers $\{r_0, r_1, r_2, \cdots\}$ by recursive congruence relations starting from an arbitrarily assigned integer s called seed and coprime to d,

$$r_0 \equiv s \ (\text{mod } d), \quad 0 < r_0 < d,$$

$$r_j \equiv sz^j \equiv zr_{j-1} \ (\text{mod } d), \quad j = 1, 2, 3, \cdots, \quad 0 < r_j < d,$$

and emits the sequence of uniform and independent random numbers

$$\{v_j := r_j/d \mid j = 0, 1, 2, \cdots\},$$

wherein said LET takes

(1) the MC lattice $G_v(d, z)$ formed by consecutive v random integer outputs of (d, z) for v = 3, 4, $\cdots$ spanned by v basis vectors

$$e_1 := (1, z, z^2, \cdots, z^{v-2}, z^{v-1}),$$
$$e_2 := (0, d, 0, \cdots, 0, 0),$$
$$e_3 := (0, 0, d, \cdots, 0, 0),$$
$$\cdots\cdots\cdots\cdots\cdots\cdots\cdots$$
$$e_{v-1} := (0, 0, 0, \cdots, d, 0),$$
$$e_v := (0, 0, 0, \cdots, 0, d)$$

as $G_v(d, z) := \{i_1 e_1 + i_2 e_2 + \cdots + i_v e_v\}$ with $\{i_1, i_2, \cdots i_v\}$ running over all integers,

(2) computes exhaustively the set of non-zero and mutually linearly independent v lattice vectors $\{e_1', e_2', \cdots, e_v'\}$ with the order of their squared lengths

$$0 < \left\| e_1' \right\|^2 \leq \left\| e_2' \right\|^2 \leq \cdots \leq \left\| e_v' \right\|^2,$$

(3) takes a set of signs $\{\varepsilon_1 = \pm 1, \varepsilon_2 = \pm 1, \cdots, \varepsilon_v = \pm 1\}$ among possible $2^v$ such sets,

(4) examines all $_{v+1}C_2 = (v+1)v/2$ edges of the v-simplex spanned by basis vectors $\{\varepsilon_1 e_1', \varepsilon_2 e_2', \cdots, \varepsilon_v e_v'\}$ and finds the largest edge length $R_v^{(max)}(\varepsilon_1, \varepsilon_2, \cdots, \varepsilon_v)$,

(5) computes the *smallest* value $R_v^{(max)}(d, z)$ of these largest edge lengths $R_v^{(max)}(\varepsilon_1, \varepsilon_2, \cdots, \varepsilon_v)$ over all possible $2^v$ sets of signs $\{\varepsilon_1, \varepsilon_2, \cdots, \varepsilon_v\}$,

(6) defines the v-th degree LET valuation of the MC (d, z) generator as

$$val_v^{(min)}(d, z) := v^{1/2}(v + 1)^{-(v-1)/(2v)} d^{(v-1)/v} / R_v^{(max)}(d, z),$$

(7) and judges that (d, z) is passable in LET of type V if

$$0.67 < val_v^{(min)}(d, z)$$

is fulfilled for all v in the range $3 \leq v \leq V$.

# Figure 1.

**Prime modulus d and a primitive root z of d:**

$$d = 100000463 \approx 2^{26.575431439}$$

$$z = 68221408 \ (\mathrm{mod}\ d),$$

$$\text{usable period } T = 50000231 \approx 2^{25.5754}$$

**(generalized 2nd degree tests of $(d, z^u)$ for $1 \le u \le U = 12$)**

1.15995802　1.17681761　1.18480967　1.13543872　1.11630116　1.09720573 1.23095350　1.56262271　1.39900882　1.19891027　1.08433292　1.84549197

**(edge tests of degree v for $3 \le v \le V = 10$)**

1.13450426　0.99690599　1.22914563　1.24562392　1.09296057　1.20051824 1.01292605　1.10680166

**(spectral tests in regular simplex criterion of degree w for $3 \le w \le W = 6$)**

1.09867177　1.09183763　1.14762223　1.20494023

**(simplex test valuations for degree 4)**

$$0.64740744 = \mathrm{val}_{min}^{(4)}(d, z) < \mathrm{val}_{max}^{(4)}(d, z) = 0.99690599 < 1.$$

$$\mathrm{val}_{min}^{(4)} = 4^{1/2}(4 + 1)^{-(4-1)/(2\cdot4)}d^{(4-1)/4} / \| e_4 - e_1 \|$$

$$\mathrm{val}_{max}^{(4)} = 4^{1/2}(4 + 1)^{-(4-1)/(2\cdot4)}d^{(4-1)/4} / \| e_1 \|$$

**4 shortest vectors $\{e_1, e_2, e_3, e_4\}$ and edge lengths squared**

$e_1 = (530871, -596490, 751596, 34693)$　　$\| e_1 \|^2 = 1203724490206$

$e_2 = (29057, 274207, 1011435, 324924)$　　$\| e_2 \|^2 = 1204610153099$

$e_3 = (959819, 433215, 429848, 12623)$　　$\| e_3 \|^2 = 1293856392219$

$e_4 = (95963, 664683, 184462, -902350)$　　$\| e_4 \|^2 = 1299274139802$

$\| e_2 - e_1 \|^2 = 1206771249015$

$\| e_3 - e_1 \|^2 = 1350049353089$

$\| e_4 - e_1 \|^2 = 2854171947998$

$\| e_3 - e_2 \|^2 = 1327376797878$

$\| e_4 - e_2 \|^2 = 2347033733217$

$\| e_4 - e_3 \|^2 = 1697214503485$

# Figure 2.

**Prime modulus d = 4r +1 with a prime r and a primitive root z of d:**

$d = 2132654933 = 4 \times 533163733 + 1 \approx 2^{30.9900}$

$z = 559679401 \pmod{d}$,

usable period $T = 1066327466 \approx 2^{29.9900}$

**(9, 10, 6)-passer of triple tests:**

**(generalized 2nd degree tests of $(d, z^u)$ for $1 \leq u \leq U = 12$)**

| | | | | | |
|---|---|---|---|---|---|
| 1.09482867 | 1.05067777 | 1.13998031 | 1.07342029 | 1.18760304 | 1.10361929 |
| 1.18389216 | 1.21869560 | 1.03539766 | 2.56143083 | 1.97409891 | 1.08812779 |

**(edge tests of degree v for $3 \leq v \leq V = 10$)**

| | | | | | |
|---|---|---|---|---|---|
| 1.16773345 | 1.11155149 | 1.10135135 | 1.12169265 | 1.21653315 | 1.14139732 |
| 1.08391529 | 1.10319380 | | | | |

**(spectral tests in regular simplex criterion of degree w for $3 \leq w \leq W = 6$)**

1.24642210  1.12566232  1.13638319  1.16207008

**(simplex test valuations for degree 4)**

$0.73724787 = \mathrm{val}_{min}^{(4)}(d, z) < 1 < \mathrm{val}_{max}^{(4)}(d, z) = 1.11155149$

$\mathrm{val}_{min}^{(4)}(d, z) = 4^{1/2}(4 + 1)^{-(4-1)/(2 \cdot 4)} d^{(4-1)/4} / \| e_4 - e_2 \|$

$\mathrm{val}_{max}^{(4)}(d, z) = 4^{1/2}(4 + 1)^{-(4-1)/(2 \cdot 4)} d^{(4-1)/4} / \| e_1 \|$

**4 shortest vectors $\{e_1, e_2, e_3, e_4\}$ and edge lengths squared**

$e_1 = (1267778, \quad 6847347, \quad -208796, \quad 6842539) \quad \| e_1 \|^2 = 95357357731830$

$e_2 = (2399247, \quad 6487061, \quad 3692601, \quad -6215912) \quad \| e_2 \|^2 = 100111210721675$

$e_3 = (555128, \quad 5259156, \quad -7617585, \quad -4721754) \quad \| e_3 \|^2 = 108289450997461$

$e_4 = (-9600928 \quad 7671694, \quad -2618137, \quad -600699) \quad \| e_4 \|^2 = 158248187930190$

$\| e_2 - e_1 \|^2 = 187154069170767$

$\| e_3 - e_1 \|^2 = 191653247711351$

$\| e_4 - e_1 \|^2 = 180015034069770$

$\| e_3 - e_2 \|^2 = 135061341058746$

$\| e_4 - e_2 \|^2 = 216763586515327$

$\| e_4 - e_3 \|^2 = 150943387694309$

# Figure 3.

**Mersenne prime modulus d and a primitive root z of d:**

$$d = 2147483647 = 2^{31} - 1$$
$$z = 1441944768 \ (\text{mod } d),$$

usable period $T = 1073741823 \approx 2^{30.0000}$

**(9, 10, 6)-passer of triple tests:**

**generalized 2nd degree spectral (edge) tests of $(d, z^k)$ for $k = 1 - 12$**

| | | | | | |
|---|---|---|---|---|---|
| 1.16755605 | 1.14722246 | 1.05539674 | 1.02825889 | 1.06935302 | 1.06348218 |
| 1.11660123 | 1.14378987 | 1.15591851 | 1.87992929 | 1.59189499 | 1.84148094 |

**3rd to 10th degree edge tests**

| | | | | | |
|---|---|---|---|---|---|
| 1.09681232 | 1.15534011 | 1.06150892 | 1.12284302 | 1.21267867 | 1.14557284 |
| 1.30475837 | 1.12257996 | | | | |

**3rd to 6th degree regular simplex spectral tests**

| | | | |
|---|---|---|---|
| 1.10838914 | 1.20729307 | 1.08044236 | 1.15475906 |

**(simplex test valuations for degree 4)**

$$0.69809005 = \text{val}_{min}^{(4)}(d, z) < 1 < \text{val}_{max}^{(4)}(d, z) = 1.15534011$$
$$\text{val}_{min}^{(4)}(d, z) = 4^{1/2}(4 + 1)^{-(4-1)/(2\cdot 4)}d^{(4-1)/4} / \| e_2 - e_1 \|$$
$$\text{val}_{max}^{(4)}(d, z) = 4^{1/2}(4 + 1)^{-(4-1)/(2\cdot 4)}d^{(4-1)/4} / \| e_1 \|$$

**4 shortest vectors $\{e_1, e_2, e_3, e_4\}$ and edge lengths squared**

$$e_1 = (3752234, \quad 2955563, \quad -2538408, \quad 7741454) \quad \| e_1 \|^2 = 89188237846305$$
$$e_2 = (4771117, \quad -5797932, \quad 6555573, \quad -1419713) \quad \| e_2 \|^2 = 101370695265011$$
$$e_3 = (759866, \quad -8323958, \quad -4626755, \quad 4041297) \quad \| e_3 \|^2 = 107604616395954$$
$$e_4 = (-3255141, \quad -1640858, \quad 7173305, \quad 9420156) \quad \| e_4 \|^2 = 153484001593406$$
$$\| e_2 - e_1 \|^2 = 244289268512964$$
$$\| e_3 - e_1 \|^2 = 154234215253923$$
$$\| e_4 - e_1 \|^2 = 167365800199039$$
$$\| e_3 - e_2 \|^2 = 177338031657361$$
$$\| e_4 - e_2 \|^2 = 199586434485025$$
$$\| e_4 - e_3 \|^2 = 228957646965530$$

# Figure 4.

**A modulus d exceeding slightly the limit of single precision integers**

$$d = 4294967357 \approx 2^{32.0000}$$

$$z = 2039780018 \;(\mathrm{mod}\; d),$$

$$\text{usable period } T = 2147483678 \approx 2^{31.0000}$$

**(10, 10, 6)-passer of triple tests:**

**(generalized 2nd degree tests of $(d, z^u)$ for $1 \le u \le U = 12$)**

| | | | | | |
|---|---|---|---|---|---|
| 1.06211726 | 1.08762366 | 1.13005528 | 1.23371285 | 1.01777251 | 1.18966689 |
| 1.15039424 | 1.09375013 | 1.07997233 | 1.05551684 | 3.19426363 | 1.46406502 |

**(edge tests of degree v for $3 \le v \le V = 10$)**

| | | | | | |
|---|---|---|---|---|---|
| 1.11108816 | 1.07141698 | 1.08103745 | 1.13289359 | 1.13068217 | 1.14320947 |
| 1.20050307 | 1.19590741 | | | | |

**(spectral tests in regular simplex criterion of degree w for $3 \le w \le W = 6$)**

| | | | |
|---|---|---|---|
| 1.16702628 | 1.04764187 | 1.20559497 | 1.17658995 |

**(simplex test valuations for degree 4)**

$$0.67458795 = \mathrm{val}_{\min}^{(4)}(d, z) < 1 < \mathrm{val}_{\max}^{(4)}(d, z) = 1.07141698$$

$$\mathrm{val}_{\min}^{(4)}(d, z) = 4^{1/2}(4 + 1)^{-(4-1)/(2 \cdot 4)}d^{(4-1)/4} / \| e_4 - e_2 \|$$

$$\mathrm{val}_{\max}^{(4)}(d, z) = 4^{1/2}(4 + 1)^{-(4-1)/(2 \cdot 4)}d^{(4-1)/4} / \| e_1 \|$$

**4 shortest vectors $\{e_1, e_2, e_3, e_4\}$ and edge lengths squared**

$$e_1 = (-9345962, \quad -1296761, \quad 10495036, \quad 9703339) \quad \| e_1 \|^2 = 293329163186782$$

$$e_2 = (12635508, \quad 7959915, \quad 8910877, \quad 7076855) \quad \| e_2 \|^2 = 352501914825443$$

$$e_3 = ( 6712762, \quad -4392063, \quad -2333, \quad 17049562) \quad \| e_3 \|^2 = 355038960899346$$

$$e_4 = (-4402511, \quad 6395037, \quad -11276598, 13374519) \quad \| e_4 \|^2 = 366318022271455$$

$$\| e_2 - e_1 \|^2 = 578279051869413$$

$$\| e_3 - e_1 \|^2 = 431625259267270$$

$$\| e_4 - e_1 \|^2 = 571083073884561$$

$$\| e_3 - e_2 \|^2 = 366550478104949$$

$$\| e_4 - e_2 \|^2 = 739937653331766$$

$$\| e_4 - e_3 \|^2 = 380525812616603$$

# Figure 5.

**A modulus d exceeding the limit of single precision integers**

$d = 8589942293 \approx 2^{33.0000}$

$z = 7310684073 \pmod{d}$,

usable period $T = (d - 1)/2 = 4294971146 \approx 2^{32.0000}$

**(9, 10, 6)-passer of triple tests:**

**(generalized 2nd degree tests of $(d, z^u)$ for $1 \leq u \leq U = 12$)**

| | | | | | |
|---|---|---|---|---|---|
| 1.14243332 | 1.21206737 | 1.14781405 | 1.11412966 | 1.16164299 | 1.22064638 |
| 1.17341771 | 1.08178888 | 1.19609179 | 1.62636269 | 1.33181569 | 1.86236914 |

**(edge tests of degree v for $3 \leq v \leq V = 10$)**

| | | | | | |
|---|---|---|---|---|---|
| 1.23109017 | 1.18619110 | 1.20680091 | 1.24827691 | 1.23896232 | 1.22674556 |
| 1.04705500 | 1.17524401 | | | | |

**(spectral tests in regular simplex criterion of degree w for $3 \leq w \leq W = 6$)**

1.22157312   1.24705115   1.23092246   1.23030928

**(simplex test valuations for degree 4)**

$0.69690988 = \mathrm{val}_{min}^{(4)}(d, z) < 1 < \mathrm{val}_{max}^{(4)}(d, z) = 1.18619110$

$\mathrm{val}_{min}^{(4)}(d, z) = 4^{1/2}(4 + 1)^{-(4-1)/(2 \cdot 4)}d^{(4-1)/4} / \| e_3 - e_1 \|$

$\mathrm{val}_{max}^{(4)}(d, z) = 4^{1/2}(4 + 1)^{-(4-1)/(2 \cdot 4)}d^{(4-1)/4} / \| e_1 \|$

**4 shortest vectors $\{e_1, e_2, e_3, e_4\}$ and edge lengths squared**

$e_1 = (8137962, 9626831, 7500541, 21487547)$    $\| e_1 \|^2 = 676875091985895$

$e_2 = (24176740, 6758732, -2469355, -6460357)$    $\| e_2 \|^2 = 678029141958898$

$e_3 = (4803481, -25085633, 15638127, -4563310)$    $\| e_3 \|^2 = 917737226952279$

$e_4 = (5389413, 12040507, 30898722, -10295212)$    $\| e_4 \|^2 = 1234741992659846$

$\| e_2 - e_1 \|^2 = 1145952555851117$

$\| e_3 - e_1 \|^2 = 1960941376832502$

$\| e_4 - e_1 \|^2 = 1570998997199219$

$\| e_3 - e_2 \|^2 = 1720866438234839$

$\| e_4 - e_2 \|^2 = 1508995478504508$

$\| e_4 - e_3 \|^2 = 1644434047899853$

## Figure 6.

**#5 generator, modulus d = $d_1 d_2$- with two odd primes $d_1$ and $d_2$:**

$$d = d_1 d_2 = 2981509224859441 \approx 2^{51.4050} \qquad d_1 = 39149459 \qquad d_2 = 76157099$$

$$z = 2575454353595197 \equiv z_1 = 28929200 \quad (\bmod\ d_1)$$

$$\equiv z_2 = 6126550 \quad (\bmod\ d_2)$$

$$\text{usable period } T = (d_1 - 1)(d_2 - 1)/4 \approx 2^{49.4050}$$

**(6, 10, 6) performance in triple tests**

**(generalized 2nd degree tests of $(d, z^u)$ for $1 \leq u \leq U = 12$)**

| | | | | | |
|---|---|---|---|---|---|
| 1.01928305 | 1.10730397 | 1.21800152 | 1.14300309 | 1.11081812 | 1.05797691 |
| 1.40516902 | 1.83748233 | 2.33771331 | 7.92410135 | 3.59552583 | 1.02760743 |

**(edge tests of degree v for $3 \leq v \leq V = 10$)**

| | | | | | |
|---|---|---|---|---|---|
| 1.11108816 | 1.07141698 | 1.08103745 | 1.13289359 | 1.13068217 | 1.14320947 |
| 1.20050307 | 1.19590741 | | | | |

**(spectral tests in regular simplex criterion of degree w for $3 \leq w \leq W = 6$)**

1.15435136    1.20259710    1.23866696    1.04730980

**(simplex test valuations for degree 4)**

$$0.73904411 = \text{val}_{min}^{(4)}(d, z) < \text{val}_{max}^{(4)}(d, z) = 1.07141698$$

$$\text{val}_{min}^{(4)}(d, z) = 4^{1/2}(4 + 1)^{-(4-1)/(2\cdot4)}d^{(4-1)/4} / \| e_4 - e_2 \|$$

$$\text{val}_{max}^{(4)}(d, z) = 4^{1/2}(4 + 1)^{-(4-1)/(2\cdot4)}d^{(4-1)/4} / \| e_1 \|$$

**4 shortest vectors $\{e_1, e_2, e_3, e_4\}$ and edge lengths squared**

$$e_1 = (135084366738,\ -96847894757,\ -172739592388,\ 275851426806)$$

$$\| e_1 \|^2 = 133560277305147791753873$$

$$e_2 = (-222002974951,\ -248677846889,\ 129293473891,\ 140332494695)$$

$$\| e_2 \|^2 = 147536003878568162253628$$

$$e_3 = (59279852751,\ 170318459013,\ 240601369758,\ 325170029614)$$

$$\| e_3 \|^2 = 196147045711338677169730$$

$$e_4 = (362100255857,\ -207917626897,\ 245530880993,\ 125437229984)$$

$$\| e_4 \|^2 = 250366247053442597959363$$

$$\| e_2 - e_1 \|^2 = 260153058045322682540307$$

$$\| e_3 - e_1 \|^2 = 250407260498276342259249$$

$$\| e_4 - e_1 \|^2 = 261447318818114636046606$$

$$\| e_3 - e_2 \|^2 = 301232295516826838652658$$

$$\| e_4 - e_2 \|^2 = 356570983494746798764853$$

$$\| e_4 - e_3 \|^2 = 274680224550850954337461$$

## Figure 7.

**#8 generator with modulus d = $d_1 d_2$ built on odd primes $d_1$ and $d_2$:**

$$d = d_1 d_2 = 4355308697161501 \qquad d_1 = 60466223 \qquad d_2 = 72028787$$

$$z = 862449024611205 \equiv z_1 \equiv 57703291 \ (\text{mod } d_1)$$

$$\equiv z_2 \equiv 26544128 \ (\text{mod } d_2)$$

usable period $T = (d_1 - 1)(d_1 - 1)/4 \approx 2^{49.95170}$

**(7, 10, 6) performance in triple tests**

**(generalized 2nd degree tests of $(d, z^u)$ for $1 \le u \le U = 12$)**

| | | | | | |
|---|---|---|---|---|---|
| 1.13760480 | 1.22721141 | 1.14163706 | 1.13971835 | 1.12385146 | 1.17510473 |
| 1.16193302 | 2.06934828 | 1.27508896 | 1.48417640 | 1.63271029 | 1.62410920 |

**(edge tests of degree v for $3 \le v \le V = 10$)**

| | | | | | |
|---|---|---|---|---|---|
| 1.18144717 | 1.11857258 | 1.04179283 | 1.21551084 | 1.11592220 | 1.14179609 |
| 1.24499783 | 1.20720329 | | | | |

**(spectral tests in regular simplex criterion of degree w for $3 \le w \le W = 6$)**

| | | | |
|---|---|---|---|
| 1.18670357 | 1.10279650 | 1.21824028 | 1.17118760 |

**(degree 4 simplex test valuations)**

$$0.67864767 = \text{val}_{min}^{(4)}(d, z) < \text{val}_{max}^{(4)}(d, z) = 1.11857258.$$

$$\text{val}_{min}^{(4)}(d, z) = 4^{1/2}(4 + 1)^{-(4-1)/(2 \cdot 4)} d^{(4-1)/4} / \| e_3 - e_2 \|$$

$$\text{val}_{max}^{(4)}(d, z) = 4^{1/2}(4 + 1)^{-(4-1)/(2 \cdot 4)} d^{(4-1)/4} / \| e_1 \|$$

**4 shortest vectors $\{e_1, e_2, e_3, e_4\}$ and edge lengths squared**

$e_1 = (84740277956, \ -392840878924, \ -334834828760, \ -34507810485)$
$$\| e_1 \|^2 = 274810022397048166008537$$

$e_2 = (346087482430, \ 142910503461, \ -99379967152, \ 365154342789)$
$$\| e_2 \|^2 = 283414029423011166973046$$

$e_3 = (-491109285645, \ 201789381432, \ -183343459968, \ 161541475994)$
$$\| e_3 \|^2 = 341617757684809086285709$$

$e_4 = (-71393534361, \ -276020292353, \ 117775587155, \ 504697593552)$
$$\| e_4 \|^2 = 349874988406075670925659$$

$$\| e_2 - e_1 \|^2 = 570500733628265955169641$$
$$\| e_3 - e_1 \|^2 = 746572823977905253090642$$
$$\| e_4 - e_1 \|^2 = 533623473132886387631124$$
$$\| e_3 - e_2 \|^2 = 752873218396690145464347$$
$$\| e_4 - e_2 \|^2 = 416422264662084510192695$$
$$\| e_4 - e_3 \|^2 = 612892197796164074335374$$

Europäisches
Patentamt

European
Patent Office

Office européen
des brevets

**EUROPEAN SEARCH REPORT**

Application Number

EP 18 17 5107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | Naoya Nakazawa ET AL: "The Geometry of Spectral Tests", , 7 June 2015 (2015-06-07), XP055521789, Retrieved from the Internet: URL:http://nakazawa-patents.jp/sptest15june7naorev.pdf [retrieved on 2018-11-07] * section 1-4 * ----- | 1 | INV. G06F7/58 |
| A | LOTHAR AFFLERBACH ET AL: "The lattice structure of pseudo-random vectors generated by matrix generators", JOURNAL OF COMPUTATIONAL AND APPLIED MATHEMATICS, vol. 23, no. 1, 1 July 1988 (1988-07-01), pages 127-131, XP055522240, NL ISSN: 0377-0427, DOI: 10.1016/0377-0427(88)90338-X * section 1 * ----- | 1 | |
| | | | TECHNICAL FIELDS SEARCHED (IPC) |
| A | L'ECUYER P: "TESTING RANDOM NUMBER GENERATORS", PROCEEDINGS OF THE WINTER SIMULATION CONFERE, XX, XX, 13 December 1992 (1992-12-13), pages 305-313, XP008029573, * section 2.2 * ----- -/-- | 1 | G06F |

The present search report has been drawn up for all claims

| Place of search | Date of completion of the search | Examiner |
|---|---|---|
| Munich | 8 November 2018 | Prins, Leendert |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 1 of 2

Europäisches Patentamt

European Patent Office

Office européen des brevets

**EUROPEAN SEARCH REPORT**

Application Number

EP 18 17 5107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | GEORGE S FISHMAN AND LOUIS R MOORE: "An Exhaustive Analysis of Multiplicative Congruential Random Number Generators with Modulus $2^{31} - 1$", SIAM JOURNAL ON SCIENTIFIC AND STATISTICAL COMPU, PHILADELPHIA, PA, US, vol. 7, no. 1, 1 January 1986 (1986-01-01), pages 24-45, XP008171472, ISSN: 0196-5204, DOI: 10.1137/0907002 * introduction, section 1, 2 * | 1 | |

TECHNICAL FIELDS SEARCHED (IPC)

The present search report has been drawn up for all claims

| Place of search | Date of completion of the search | Examiner |
|---|---|---|
| Munich | 8 November 2018 | Prins, Leendert |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2884386 A

- RU 2589405

**Non-patent literature cited in the description**

- **HIROSHI ; NAOYA NAKAZAWA.** *Designs of uniform and independent random numbers with long period and high precision,* 09 March 2008, http://www10.plala.or.jp/h-nkzw/pastreports.html
- **NAOYA NAKAZAWA ; HIROSHI NAKAZAWA.** *Method of spectral tests of multiplicative congruential random number generators,* 05 June 2014, http://www.nakazawa-patents.jp/index2015.html
- **NAOYA NAKAZAWA ; HIROSHI NAKAZAWA.** *The geometry of spectral tests,* 10 April 2015, http://www.nakazawa-patents.jp/index2015.html

- **G. S. FISHMAN ; L. R. MOORE.** An exhaustive analysis of multiplicative congruential random number generators with modulus 231 - 1. *SIAM Journal on Scientific and Statistical Computing,* 1986, vol. 7, 24-45
- **NAOYA NAKAZAWA ; HIROSHI NAKAZAWA.** *Edge tests of multiplicative congruential random number generators,* 09 September 2017, http://www.nakazawa-patents.jp
- **NAOYA NAKAZAWA ; HIROSHI NAKAZAWA.** *Constructive design of uniform and independent random number generators,* 29 April 2014, http://nakazawa-patents.jp/index2015.html with the filename invention1a.pdf
- **HIROSHI NAKAZAWA ; NAOYA NAKAZAWA.** *The prospectus of Nakazawa Patents,* July 2014, http://nakazawa-patents.jp/index2015.html with the filename eprospectus141026.pdf